# EUROPEAN PATENT APPLICATION

(11) **EP 4 708 385 A1**
(43) Date of publication of application: **11.03.2026**
(21) Application number: 24813891.9
(22) Date of filing: 03.04.2024
(51) Int. Cl.: H01M 4/36, H01M 4/583, H01M 4/62, H01M 4/58, H01M 4/136, H01M 10/0525

(54) **SECONDARY BATTERY POSITIVE ELECTRODE MATERIAL, SECONDARY BATTERY POSITIVE ELECTRODE SHEET, AND SECONDARY BATTERY**

(30) Priority: 02.06.2023 CN 202310647480
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); YAO, Yi, Shanghai 201206 (CN); HOU, Min, Shanghai 201206 (CN); LIU, Chan, Shanghai 201206 (CN); WANG, Tong, Shanghai 201206 (CN); SHI, Caihong, Wenzhou, Zhejiang 325000 (CN); GUO, Yingying, Shanghai 201206 (CN); YANG, Yaqing, Shanghai 201206 (CN)
(74) Representative: Vitina, Maruta
(86) International application number: PCT/CN2024/085779
(87) International publication number: WO 2024/244685

(57) **Abstract**

A secondary battery positive electrode material, relating to the field of battery materials. The secondary battery positive electrode material comprises large particles with a particle size greater than or equal to 2 µm and small particles with a particle size smaller than or equal to 1 µm. The surfaces of some of the small particles are provided with a carbon coating layer; and the surfaces of some of the large particles are not provided with a carbon coating layer. According to the positive electrode material, by means of gradation design of the large and small particles, the effect that the small particles fill gaps left by accumulation of the large particles can be achieved, and then the compaction density is improved. Moreover, the surfaces of the small particles are coated with a carbon layer to provide sufficient electron transport paths, so that a stable electron pathway for the large particles wrapped by the small particles can be maintained in a charge and discharge cycle. Additionally, the surfaces of the large particles with the particle size larger than or equal to 2 µm are not hindered by a carbon coating layer, so that the wetting capacity of an electrolyte to the electrode sheet can be improved, and faster transmission of lithium ions at an interface can be realized, thereby reducing the impedance in a charge and discharge process.

## Description

### TECHNICAL FIELD

The present invention belongs to the field of battery materials, and specifically involves a secondary battery positive electrode material, a secondary battery positive electrode and a secondary battery.

### BACKGROUND TECHNOLOGY

In the positive electrode materials for secondary batteries represented by lithium iron phosphate, oxygen atoms and phosphorus atoms form stable polyphosphate anions. The structural stability and thermal stability of these materials are significantly better than those of α-sodium ferrite layered positive electrode materials, which are represented by ternary positive electrode materials. However, the intrinsic ionic conductivity and electronic conductivity of olivine-structured positive electrode materials are both low, leading to inferior performance in low-temperature and high-rate charging and discharging compared to layered positive electrode materials.

To address the aforementioned issues, olivine-structured positive electrode materials for secondary batteries need to be ground and sintered to ensure particle sizes reach the micron and nanometer levels. Additionally, carbon coating is required on the material surface. However, adjusting the size of the positive electrode material significantly affects its compaction density after forming the electrode, which in turn impacts the battery's energy density. While carbon coating on the material surface can markedly enhance electron conductivity between materials, the carbon layer itself has weak lithium-ion conductivity and must undergo reduction reactions under inert or reducing gas conditions using a carbon source. This inherently prevents it from being completed in the same process as oxide coatings that can generate fast ion conductors. This limitation restricts the possibility of modifying the material surface with oxides to improve interfacial ion transport.

Therefore, it is an urgent technical problem to prepare a positive electrode material for secondary battery which can improve the compaction density of the material, improve the electron conductivity and ion conduction rate, and reduce the impedance of the battery.

### SUMMARY OF THE PRESENT INVENTION

The purpose of the present invention is to overcome the problems existing in the above-mentioned prior art and provide a positive electrode material for secondary battery with high compaction density and small impedance.

The present invention is realized by the following technical solution:
The present invention provides a secondary battery positive electrode material, which includes: large particles with a particle size of more than 2µm and small particles with a particle size of less than 1µm; at least some of the small particles have a carbon coating on their surface; at least some of the large particles do not have a carbon coating on their surface.

The present invention improves the compaction density of the positive electrode material through a size distribution of large and small particles. By using large particles with a particle size of >2µm and small particles with a particle size of ≤1µm, it can achieve the effect of small particles filling the gaps between large particles, thereby increasing the compaction density of the positive electrode material in the positive electrode. The surface of the small positive electrode material particles with a particle size of ≤1µm is coated with a carbon layer, which partially serves as a conductive agent. This coating surrounds the large particles with a particle size of ≥2µm in the electrode, maintaining stable electron pathways during charge-discharge cycles and providing sufficient electron transport paths without affecting the electronic conductivity of the positive electrode. The surface of the large particles with a particle size of ≥2µm directly contacts the electrolyte, free from the obstruction of a carbon coating. This not only enhances the electrolyte ability to wet the electrode but also facilitates faster lithium-ion transport at the interface, thus reducing impedance during charge-discharge processes.

The particle size of the present invention is a size parameter of the particles, that is, the particle size is the maximum length of the positive electrode material particles in any other shape direction.

As a preferred embodiment of the secondary battery positive electrode material according to the present invention, at least some of the large particles have an oxide coating.

The present invention further involves the oxide coating and doping of large particle positive electrode materials with a particle size ≥2µm. On one hand, it can form fast ion conductors or fine-tune the material's lattice, thereby enhancing the interfacial and bulk ion transport rates of large particles and reducing impedance during charging and discharging processes. On the other hand, it can minimize damage to the material particles' surfaces caused by electrolytes, thus improving the cycle life of the material.

As a preferred embodiment of the secondary battery positive electrode material according to the present invention, the surface of the small particles is uniformly coated with carbon and the surface of the large particles is uniformly coated with oxide.

In some embodiments, the oxide coating layer is partially formed as a fast ion conductor and the remaining portion is in the form of an oxide.

As a preferred embodiment of the secondary battery positive electrode material described in the present invention, the oxide coating layer is at least one of alumina, zirconia, cobalt oxide, boron oxide, nickel oxide, tungsten oxide, titanium oxide, and vanadium oxide. By selecting at least one of alumina, zirconia, cobalt oxide, boron oxide, nickel oxide, tungsten oxide, titanium oxide, and vanadium oxide as the oxide coating layer, the present invention can increase ionic conductivity, thereby reducing the impedance of the secondary battery.

The present invention involves setting at least one of alumina, zirconia, cobalt oxide, boron oxide, nickel oxide, tungsten oxide, titanium oxide, and vanadium oxide on the surface of a large-grained positive electrode material with a particle size of ≥2µm. Some of these can form fast ion conductors such as lithium aluminate, lithium borate, or lithium titanate, while the remaining part exists in oxide form, which can enhance the ion conduction rate on the material surface while reducing damage to the material surface caused by by-products like HF in the electrolyte. In some embodiments, the oxide coating on the surface of the large-grained positive electrode material includes one or more selected from alumina, boron oxide, and titanium oxide, optionally or preferably including one or more selected from zirconia, cobalt oxide, nickel oxide, tungsten oxide, and vanadium oxide.

As a preferred embodiment of the secondary battery positive electrode material according to the present invention, at least one of the following is satisfied:
(1) The positive electrode material has an olivine structure;
(2) The chemical formula of the positive electrode material is: LixMnyFel-yPO4, where 0.75≤x≤1.05, 0≤y≤0.9.

Preferably, the positive electrode material is at least one of lithium iron phosphate, lithium manganese phosphate and lithium manganese phosphate. In some embodiments, the positive electrode material is lithium iron phosphate and/or lithium manganese phosphate.

As a preferred embodiment of the secondary battery positive electrode material according to the present invention, the positive electrode material also contains metal doping elements.

In the process of preparing positive electrode materials, metal doping elements can be introduced into the bulk phase of positive electrode materials to dope and fine-tune the lattice of materials, so as to improve the interface and bulk phase ion transport rate of positive electrode materials.

As a preferred embodiment of the secondary battery positive electrode material according to the present invention, the metal doping element is at least one of aluminum, zirconium, cobalt, tungsten, titanium, vanadium, nickel and magnesium.

In the positive electrode material of the present invention, the large particles and the small particles can be the same positive electrode material or different positive electrode materials. Preferably, the large particles and the small particles in the positive electrode material have the same crystal structure.

As a preferred embodiment of the secondary battery positive electrode material described in the present invention, the particle size distribution graph of the positive electrode material, after decomposition, includes at least two distribution peaks. Among them, the area S1 of the largest distribution peak with a median particle size ≥1.5µm and the area S2 of the largest distribution peak with a median particle size <1.5µm satisfy 1:4≤S1:S2≤4:1. The specific decomposition method can be deconvolution.

The present invention employs a size distribution of large and small particles to enhance the performance of the positive electrode material. The particle size distribution of the positive electrode material has at least two peaks: one with a median particle size ≥1.5µm and another with a median particle size <1.5µm. The inventor found through research that when the two peaks satisfy 1:4≤S1:S2≤4:1 (S1 is the area of the peak with a median particle size ≥1.5µm, S2 is the area of the peak with a median particle size <1.5µm), the positive electrode material exhibits higher compaction density and lower internal resistance, resulting in superior performance. In some embodiments, the two peaks satisfy 1:3≤S1:S2≤3:1. In other embodiments, the two peaks satisfy 2:3≤S1:S2≤3:1.

The present invention does not limit the preparation method of the positive electrode material. Preferably, the secondary battery positive electrode material is obtained by mixing the positive electrode material with different particle sizes.

Specifically, the present invention provides the following method for preparing positive electrode materials for secondary batteries as an example, which should not be understood as a limitation.

In the present invention, the method for preparing large particles in the positive electrode material includes the following steps: mixing the precursor with the lithium source, calcining, and crushing to D50≥2µm, thus obtaining a positive electrode material containing large particles with a particle size of ≥2µm; the precursor includes at least one of iron phosphate, manganese phosphate, and iron-manganese phosphate solid solutions. Furthermore, after mixing the precursor with the lithium source, ball milling is performed, followed by drying and then calcination. The lithium source can be lithium carbonate and/or lithium hydroxide.

The method for coating the surface of large particles with oxide in the positive electrode material includes the following steps: mixing and calcining the large particles with a particle size of ≥2µm and oxide additives, then cooling to form the product. Preferably, the mass ratio of the large particle positive electrode material to the oxide additive is 100:(0.1-0.3). The oxide additive can be one or more selected from metal salts, metal oxides, and metal hydroxides, which contain one or more elements selected from aluminum, zirconium, cobalt, boron, nickel, tungsten, titanium, and vanadium.

The method for preparing small particles of the positive electrode material includes the following steps: mixing the precursor with lithium source, calcining, and crushing to D50≤1µm, thus obtaining a positive electrode material containing small particles with a diameter ≤1µm; the precursor includes at least one of iron phosphate, manganese phosphate, and iron-manganese phosphate solid solutions. Further, after mixing the precursor with the lithium source, ball milling is performed, followed by drying and then calcination.

The method for coating the surface of small particles in the positive electrode material with carbon includes the following steps: mix the small particles with a particle size ≤1µm and a carbon source, calcine under an inert atmosphere, cool, and crush to D50 ≤1µm, thus forming the product. The carbon source can be carbon-containing compounds such as sugars, for example glucose, fructose, etc.

The positive electrode materials of different particle sizes obtained above are mixed to produce the secondary battery positive electrode material. Furthermore, the positive electrode materials with a D50 of ≥2µm can be mixed with those with a D50 of ≤1µm in a mass ratio of 1:4 to 4:1, for example, 1:3 to 3:1, 1:2 to 3:1, or 1:1.5 to 3:1. Additionally, the positive electrode materials with a D50 of ≥2µm and surface-coated with oxide can be mixed with those with a D50 of ≤1µm and surface-coated with carbon in a mass ratio of 1:4 to 4:1.

In some embodiments, the secondary battery positive electrode material of the present invention is a mixture of positive electrode materials with oxide coating on part or all particle surfaces and carbon coating on part or all particle surfaces, where the D50 of the positive electrode material is ≥2µm and the D50 of the positive electrode material is ≤1µm. The mass ratio of the positive electrode material with D50 ≥2µm to the positive electrode material with D50 ≤1µm is preferably 1:4 to 4:1, for example, 1:3 to 3:1, 1:2 to 3:1, or 1:1.5 to 3:1. In some embodiments, the positive electrode material of the secondary battery of the present invention is a mixture of positive electrode materials with oxide coating on all particle surfaces and carbon coating on all particle surfaces, where the D50 of the positive electrode material is ≤1µm.

In the above preparation method example, the material is crushed to D50≥2µm, which can ensure that there is an oxide coating on the surface of positive electrode material with a particle size of 2µm or more, and D50≤1µm can ensure that there is a carbon coating on the surface of positive electrode material with a particle size of 1µm or less.

Further, the method of introducing metal doping elements into positive electrode materials includes the following steps: mixing precursors, lithium sources with doping elements containing target metal doping elements, calcining, and crushing to the desired particle size. This method of introducing metal doping elements is applicable to both large and small particle positive electrode materials. Further, after mixing precursors, lithium sources with doping elements containing target metal doping elements, ball milling, drying, and then calcining.

Another object of the present invention is to provide a positive electrode for a secondary battery, which comprises the secondary battery positive electrode material.

The positive electrode made of the secondary battery positive electrode material according to the present invention can take into account both the compaction density and dynamic performance of the electrode.

Preferably, the positive electrode for the secondary battery comprises a positive electrode material with different crystal structures; more preferably, the positive electrode of the secondary battery comprises an olivine structure positive electrode material and a α-sodium ferrite structure positive electrode material.

Another object of the present invention is to provide a secondary battery, which comprises a positive electrode of the secondary battery.

The secondary battery made of the positive electrode of the secondary battery according to the present invention has a high energy density and low impedance.

The present invention has the following beneficial effects: By using particles with a diameter of ≥2µm and particles with a diameter of ≤1µm in combination, the compaction density of the positive electrode material is improved. Further, a carbon coating layer is set on the surface of the small particles with a diameter of ≤1µm, which can partially serve as a conductive agent. This layer surrounds the large particles with a diameter of ≥2µm in the electrode, maintaining stable electron pathways during charge-discharge cycles. Additionally, oxide coating on the surface of the large particles with a diameter of ≥2µm can partially generate fast ion conductors such as lithium aluminate, lithium borate, or lithium titanate, while the remaining part exists in oxide form. This overcomes the issue of weak interfacial ion conductivity in large particle positive electrode materials due to their small specific surface area and long ion transport distances, enhancing the ion conductivity rate on the material surface while reducing the damage caused by by-products like HF in the electrolyte. Applying the present invention's positive electrode material to the positive electrode can balance both the compaction density and kinetic performance of the electrode, further enabling secondary batteries to achieve higher energy density and lower impedance.

### DETAILED DESCRIPTION

To better illustrate the objectives, technical solutions, and advantages of the present invention, the following will provide further explanation with reference to specific embodiments. Those skilled in the art should understand that the specific embodiments described herein are intended to explain the present invention and are not intended to limit it.

The test methods used in the embodiments are conventional methods unless otherwise specified; the materials and reagents used can be obtained from commercial sources unless otherwise specified.

In the present invention, D50 particle size is the particle size corresponding to the cumulative particle size distribution percentage of 50%, which is measured by laser particle size meter.

### Example 1

positive electrode material 1: D50 particle size is ≥2µm and the surface has an oxide coating layer. The preparation method is as follows:
   (1) The precursor iron phosphate and lithium source lithium carbonate are mixed with a molar ratio of 2:1.03 and added to water to form a slurry with a solid content of 20%. The slurry is ball-milled for 12h until the particle size of the slurry reaches D50 1.7µm through laser particle size tester; the above slurry is dried to obtain solid mixture 1;
   (2) Place solid mixture 1 in the sintering furnace and introduce nitrogen containing 5% hydrogen. After the air in the furnace is exhausted, heat it to 850°C at a heating rate of 5°C/min and keep it for 12h. After cooling, the intermediate product 1 is obtained by jet milling. The D50 of intermediate product 1 is 2.3µm;
   (3) Add oxide additive Co(OH)₂ powder to intermediate product 1, with the mass ratio of the oxide additive to intermediate product 1 being 0.20:100; sinter at 850 °C under nitrogen atmosphere for 8h, then cool, and the positive electrode is prepared accordingly material 1. The oxide coating is nanoscale, having minimal effect on particle size, resulting in a D50 of 2.3µm for the positive electrode material 1.
positive electrode material 2: small particles with D50 particle size ≤1µm and carbon coating on the surface. The preparation method is as follows:
   S1. Mix the precursor iron phosphate with lithium source lithium carbonate in a molar ratio of 2:1.03 and add it to water to form a slurry with a solid content of 20%. Ball mill the slurry for 12h until the particle size of the particles reaches D50 0.4µm through laser particle size tester;
   S2. Add 1% of the total mass of glucose as a carbon source to the slurry and stir until dissolved. Then dry the slurry to obtain solid mixture 2. Place solid mixture 2 in a sintering furnace and introduce nitrogen. After all air is expelled from the furnace, heat at a rate of 5°C/min to 750°C and maintain for 12h. After cooling, crush with gas flow, and the positive electrode is prepared accordingly material 2, with a D50 of 0.74µm.

The preparation method for the positive electrode is as follows: Mix the positive electrode materials 1 and 2 in a mass ratio of 67:33. Then, combine the mixed positive electrode materials with conductive agent carbon black, carbon nanotubes (CNT), and binder polyvinylidene fluoride (PVDF) in a mass ratio of 97:1:0.5:1.5, and add organic solvent N-methylpyrrolidone (NMP) to form a uniform dispersion through high-speed stirring. The dispersion is subjected to negative pressure degassing in a stirring tank to obtain a suitable positive electrode slurry for coating. The obtained positive electrode slurry is coated onto aluminum foil using a transfer coater, followed by drying, cold pressing, and slitting to form the desired shape of the positive electrode. During the cold pressing process, control the compaction density of the positive electrode material coating to achieve the maximum compaction density that allows the electrode to be wound.

### Example 2

The difference between this embodiment and Example 1 lies in: in step (2), the jet milling produces an intermediate product 1 with a D50 of 2.5µm; in step (3), the oxide additive is NiO, and the mass ratio of the oxide additive to the intermediate product 1 is 0.17:100, resulting in a positive electrode material 1 with a D50 of 2.5µm; all other steps are the same as Example 1, and the positive electrode is prepared accordingly.

### Example 3

The difference between this embodiment and Example 1 lies in: in step (2), the jet milling produces an intermediate product 1 with a D50 of 2.1µm; in step (3), the oxide additive is Y₂O₃, and the mass ratio of the oxide additive to the intermediate product 1 is 0.15:100, with a sintering temperature of 800°C, resulting in a positive electrode material 1 with a D50 of 2.1µm; all other steps are the same as Example 1, and the positive electrode is prepared accordingly.

### Example 4

The difference between this embodiment and Example 1 is that in step (3), the oxide additive is TiO₂, and the mass ratio of the oxide additive to the intermediate product 1 is 0.25:100; all other steps are the same as Example 1, and the positive electrode is prepared accordingly.

### Example 5

The difference between this embodiment and Example 1 lies in: in step (2), the jet milling produces intermediate product 1 with a D50 of 2.7µm; in step (3), the oxide additive is B₂O₃ and the sintering temperature is 750°C, resulting in a positive electrode material 1 with a D50 of 2.7µm; all other steps are the same as Example 1, and the positive electrode is prepared accordingly.

### Example 6

The difference between this embodiment and Example 1 is that in the preparation method of the positive electrode, the positive electrode material 1 and the positive electrode material 2 are matched in a mass ratio of 40:60; all other steps are the same as Example 1, and the positive electrode is prepared accordingly.

### Example 7

The difference between this embodiment and Example 1 is that in the preparation method of the positive electrode, the positive electrode material 1 and the positive electrode material 2 are matched in a mass ratio of 75:25; all other steps are the same as Example 1, and the positive electrode is prepared accordingly.

### Example 8

The difference between this embodiment and Example 1 lies in: In step S1, the precursor is a mixture of iron phosphate and manganese phosphate, with a mass ratio of iron phosphate to manganese phosphate being 30:70; in step S2, the jet milling is used until the D50 of the positive electrode material 2 is 0.67µm; in the preparation method of the positive electrode, the positive electrode material 1 and positive electrode material 2 are mixed in a mass ratio of 40:60; all other steps are the same as Example 1, and the positive electrode is prepared accordingly.

### Example 9

The difference between this embodiment and Example 1 lies in: In step S1, the precursor is a mixture of iron phosphate and manganese phosphate, with a mass ratio of iron phosphate to manganese phosphate being 30:70; in step S2, the jet milling is used until the D50 of the positive electrode material 2 is 0.67µm; in the preparation method of the positive electrode, the positive electrode material 1 and positive electrode material 2 are mixed in a mass ratio of 60:40; all other steps are the same as those in Example 1, and the positive electrode is prepared accordingly.

### Example 10

The difference between this embodiment and Example 1 lies in: In step (1), the precursor is a mixture of iron phosphate and manganese phosphate, with a mass ratio of iron phosphate to manganese phosphate being 30:70; in step (2), the jet milling is used until to achieve a D50 of 2.4µm for intermediate product 1; in step (3), the sintering temperature is 900°C; in step S1, the precursor is a mixture of iron phosphate and manganese phosphate, with a mass ratio of iron phosphate to manganese phosphate being 30:70; in step S2, the jet milling is used until a D50 of 0.67µm for positive electrode material 2; all other steps are the same as Example 1, and the positive electrode is prepared accordingly.

### Example 11

The difference between this embodiment and Example 1 lies in: in step (1), the precursor is a mixture of iron phosphate and manganese phosphate, with a mass ratio of iron phosphate to manganese phosphate being 40:60; in step (2), the jet milling is used until to achieve a D50 of 2.7µm for intermediate product 1; in step (3), the sintering temperature is 950°C; in step S1, the precursor is a mixture of iron phosphate and manganese phosphate, with a mass ratio of iron phosphate to manganese phosphate being 40:60; in step S2, the jet milling is used until a D50 of 0.61µm for positive electrode material 2; all other steps are identical to those in Example 1, and the positive electrode is prepared accordingly.

### Example 12

The difference between this embodiment and Example 1 lies in the following: In step (1), the precursor is a mixture of iron phosphate and manganese phosphate, with a mass ratio of iron phosphate to manganese phosphate being 30:70; in step (2), the jet milling is used until to achieve a D50 of 2.4µm for intermediate product 1; in step (3), the sintering temperature is 900°C; all other steps are identical to those in Example 1, and the positive electrode is prepared accordingly.

### Example 13

The difference between this embodiment and Example 1 is that in the preparation method of positive electrode material 1, the intermediate product 1 is not coated with oxide, that is, step (3) is not carried out, and the intermediate product 1 is positive electrode material 1 in this embodiment; all other steps are the same as Example 1, and the positive electrode is prepared accordingly.

### Example 14

The difference between this embodiment and Example 1 lies in the preparation method of the positive electrode material 1, where step (1) is changed to mixing precursor iron phosphate, lithium source lithium carbonate, and nano-titanium dioxide in a molar ratio of 2:1.03:0.004 and adding them to water; in the preparation method of positive electrode material 2, step (1) is also changed to mixing precursor iron phosphate, lithium source lithium carbonate, and nano-titanium dioxide in a molar ratio of 2:1.03:0.004 and adding them to water. All other steps are the same as Example 1, and the positive electrode is prepared accordingly.

### Example 15

The difference between this embodiment and Example 8 lies in that, in the preparation method of positive electrode material 1, the precursor used is a solid solution of iron manganese phosphate with an iron manganese element ratio of 3:7, and all other steps are the same as Example 8, and the positive electrode is prepared accordingly.

### Comparative Example 1

positive electrode material 2: small particles with particle size ≤1µm and carbon coating on the surface. The preparation method is as follows:
   S1. Mix the precursor iron phosphate with lithium source lithium carbonate in a molar ratio of 2:1.03 and add it to water to form a slurry with a solid content of 20%. Ball mill the slurry for 12h until the particle size of the particles reaches D50 0.3~0.7µm through laser particle size tester;
   S2. Add 1% of the total mass of glucose as a carbon source to the slurry and stir until dissolved. Then dry the slurry to obtain solid mixture 2. Place solid mixture 2 in a sintering furnace and introduce nitrogen. After all the air is expelled from the furnace, heat at a rate of 5 °C/min to 750°C and maintain for 12h. After cooling, crush with gas flow, and the positive electrode is prepared accordingly material 2. The D50 of positive electrode material 2 is 0.74µm.
positive electrode material 3: large particles with particle size of 2µm and carbon coating on the surface. The preparation method is as follows:
   (A) Mix the precursor iron phosphate with lithium source lithium carbonate in a molar ratio of 2:1.03, add it to water, and mix it into a slurry with a solid content of 20%. Ball mill the slurry for 12h until the particle size reaches D50 1.5~2µm through laser particle size tester;
   (b) Add 1% of the total mass of glucose as a carbon source to the slurry and stir until dissolved. Then dry the slurry to obtain solid mixture 3. Place solid mixture 3 in a sintering furnace and introduce nitrogen. After all air is expelled from the furnace, heat at a rate of 5°C/min to 850°C and hold for 12h. After cooling, crush with gas flow, and the positive electrode material 3 is prepared accordingly, with a D50 of 2.3µm.

The preparation method for the positive electrode is as follows: Mix the positive electrode materials 2 and 3 in a mass ratio of 33:67, then blend the mixed positive electrode materials with conductive agent carbon black, carbon nanotubes (CNT), and binder polyvinylidene fluoride (PVDF) in a mass ratio of 97:1:0.5:1.5, and add organic solvent N-methylpyrrolidone (NMP) to form a uniform dispersion through high-speed stirring; degas the dispersion under negative pressure in a stirring tank to obtain a suitable positive electrode slurry for coating. The obtained positive electrode slurry is coated onto aluminum foil using a transfer coater, followed by drying, cold pressing, and slitting to form the desired shape of the positive electrode; during the cold pressing process, control the compaction density of the positive electrode material coating to the maximum compaction density that allows the electrode to be wound.

### Comparative Example 2

The difference between this embodiment and Example 1 lies in the following: In step S1, the precursor is a mixture of iron phosphate and manganese phosphate, with a mass ratio of iron phosphate to manganese phosphate being 30:70; in step S2, the D50 of positive electrode material 2 is 0.67µm; in the preparation method of the positive electrode, positive electrode material 2 and positive electrode material 3 are mixed in a mass ratio of 60:40; all other steps are the same as Example 1, and the positive electrode is prepared accordingly.

### Comparative Example 3

The difference between Comparative Example 1 and Comparative Example 2 lies in the following: In step S1, the precursor is a mixture of iron phosphate and manganese phosphate, with a mass ratio of iron phosphate to manganese phosphate being 40:60; in step S2, the D50 of positive electrode material 2 is 0.61µm; in step (a), the precursor is a mixture of iron phosphate and manganese phosphate, with a mass ratio of iron phosphate to manganese phosphate being 40:60; in step (b), the D50 of positive electrode material 3 is 2.7µm; all other steps are the same as Comparative Example 1, and the positive electrode is prepared accordingly.

### Comparative Example 4

The difference between the present embodiment and Example 1 is that in the preparation method of the positive electrode, only the positive electrode material 1 is used, not the positive electrode material 2; all other steps are the same as Example 1, and the positive electrode is prepared accordingly.

### Comparative Example 5

The difference between the present embodiment and Example 1 is that in the preparation method of the positive electrode, only the positive electrode material 2 is used, not the positive electrode material 1; all other steps are the same as Example 1, and the positive electrode is prepared accordingly.

### Comparative Example 6

The difference between this embodiment and Example 1 is that in step (3), the oxide additive is calcium oxide; all other steps are the same as Example 1, and the positive electrode is prepared accordingly.

### Comparative Example 7

The difference between this embodiment and Example 1 is that in step S2, glucose is not added to the slurry, that is, the carbon coating is not applied to the positive electrode material 2; all other steps are the same as Example 1, and the positive electrode is prepared accordingly.

### Comparative Example 8

The difference between this embodiment and Example 1 is that in the preparation method of the positive electrode, the positive electrode material 1 and the positive electrode material 2 are matched in a mass ratio of 10:90; all other steps are the same as Example 1, and the positive electrode is prepared accordingly.

### Comparative Example 9

The difference between this embodiment and Example 1 is that in the preparation method of the positive electrode, the positive electrode material 1 and the positive electrode material 2 are combined in a mass ratio of 90:10; all other steps are the same as Example 1, and the positive electrode is prepared accordingly.

The positive electrode obtained by the examples and the comparative examples was subjected to extreme compaction test.

The method for testing the ultimate compaction density is as follows: After the positive electrode is rolled to the set compaction density using a roller press, it is manually folded. The electrode is bent until both sides of the fold are fully adhered together, and the crease is checked. The highest compaction density that can maintain the electrode crease without light passing through is considered the ultimate compaction density of the electrode. Test results are shown in Table 1.

The positive electrode obtained by the examples and the comparative examples was used as the positive electrode of the secondary battery for 50%SOC DC internal resistance test.

The preparation method of the negative electrode is as follows:
The negative electrode active material artificial graphite, conductive agent carbon black, binder styrene-butadiene rubber, and thickener sodium carboxymethyl cellulose (CMC-Na) are mixed in a mass ratio of 96.8:1.2:1.2:0.8 and added to deionized water for high-speed stirring to form a uniform dispersion. The dispersion is subjected to negative pressure degassing in a mixing tank to obtain a suitable negative electrode slurry for coating. The obtained negative electrode slurry is then coated onto copper foil using a transfer coater, followed by drying, cold pressing, and strip separation to produce the desired shape of the negative electrode. During the cold pressing process, the compaction density of the negative electrode active material coating is controlled at 1.65g/cm³.

The preparation method of secondary battery is as follows:
Place the positive electrodes and negative electrodes on either side of the separator (the separator uniformly uses a 9µm thick PE separator, with 1µm thick PVDF coated on both sides) and wind them to form a core. Weld the exposed parts of the positive electrodes and negative electrodes to the tab, then place the entire assembly into an aluminum-plastic film for pre-sealing, ensuring that the tab remains exposed outside the aluminum-plastic film while leaving one side open for electrolyte injection;
In a mixed solvent of ethylene carbonate (EC): methyl ethyl carbonate (EMC): diethyl carbonate (DEC) = 3:5:2 (by volume), add 10wt% LiPF6, 1wt% vinylene carbonate (VC), 2wt% vinylene carbonate diethyl ester (DTD), and 1wt% vinylene carbonate (VC) as lithium salt and additives to prepare the electrolyte. The mass percentages of the lithium salt and each additive are calculated based on the total mass of the electrolyte; inject the electrolyte into the aluminum-plastic film containing the core, then proceed with encapsulation, standing, and formation processes to obtain the secondary battery.

The method for testing the DC internal resistance at 50%SOC is as follows: Use a charge-discharge device to adjust the battery SOC state to 50% (i.e., charge from the fully discharged state to 50% of the rated capacity) at a rate of 0.33C (i.e., 0.33 times the battery rated capacity in ampere-hours). After resting for 30min, discharge the battery at a constant 3C current of A. Record the voltage changes ΔV during the discharge process, then the DC internal resistance at 50%SOC = ΔV/A. See Table 1 for test results.

The particle size distribution of the positive electrode materials (positive electrode material 1 in Comparative Example 4 and positive electrode material 2 in Comparative Example 5) after mixing in each embodiment and control was measured using a laser particle size tester. The particle size distribution was decomposed using deconvolution to obtain each distribution peak, and the median particle size and maximum area of each peak were determined. For Comparative Examples 4 and 5, the positive electrode materials had only one distribution peak, while the positive electrode materials in the other embodiments and control had two larger distribution peaks: one with a median particle size ≥1.5µm and another with a median particle size <1.5µm. The maximum areas of these two peaks are denoted as S1 and S2, respectively. The test results are shown in Table 1.

**Table 1 Performance test results of positive electrodes and secondary batteries obtained by examples and comparative examples**

| | Ultimate compaction density (g/cm3) | 50%SOC DC internal resistance (mΩ) | Median particle size of distribution peak 1 (µm) | Median particle size of distribution peak 2 (µm) | S1:S2 |
|---|---|---|---|---|---|
| Example 1 | 2.55 | 53 | 2.2 | 0.76 | 2:1 |
| Example 2 | 2.60 | 55 | 2.5 | 0.75 | 2:1 |
| Example 3 | 2.50 | 54 | 1.7 | 0.82 | 2:1 |
| Example 4 | 2.55 | 53 | 2.2 | 0.76 | 2:1 |
| Example 5 | 2.60 | 56 | 2.7 | 0.74 | 2:1 |
| Example 6 | 2.45 | 51 | 2.0 | 0.75 | 2:3 |
| Example 7 | 2.65 | 55 | 2.2 | 0.78 | 3:1 |
| Example 8 | 2.45 | 55 | 2.1 | 0.69 | 2:3 |
| Example 9 | 2.60 | 53 | 2.1 | 0.70 | 3:2 |
| Example 10 | 2.55 | 61 | 2.3 | 0.69 | 2:1 |
| Example 11 | 2.65 | 58 | 2.6 | 0.65 | 2:1 |
| Example 12 | 2.55 | 56 | 2.3 | 0.76 | 2:1 |
| Example 13 | 2.55 | 57 | 2.2 | 0.76 | 2:1 |
| Example 14 | 2.55 | 50 | 2.2 | 0.76 | 2:1 |
| Example 15 | 2.55 | 55 | 2.1 | 0.69 | 2:1 |
| Comparative Example 1 | 2.55 | 60 | 2.2 | 0.76 | 2:1 |
| Comparative Example 2 | 2.55 | 64 | 2.1 | 0.69 | 2:3 |
| Comparative Example 3 | 2.65 | 63 | 1.8 | 0.65 | 2:1 |
| Comparative Example 4 | 2.35 | 53 | 2.3 | - | - |
| Comparative Example 5 | 2.30 | 50 | - | 0.74 | - |
| Comparative Example 6 | 2.55 | 60 | 2.2 | 0.76 | 2:1 |
| Comparative Example 7 | 2.55 | 72 | 2.2 | 0.76 | 2:1 |
| Comparative Example 8 | 2.30 | 54 | 1.6 | 0.75 | 1:9 |
| Comparative Example 9 | 2.35 | 62 | 2.3 | 0.97 | 9:1 |

From the test results in Table 1, it can be seen that the positive electrodes obtained from Examples 1 to 15 of the present invention have a high ultimate compaction density, which can enhance the energy density of secondary batteries. Moreover, when the positive electrodes from Examples 1 to 15 are used in secondary batteries, the resulting batteries exhibit a low 50%SOC DC internal resistance, indicating that the positive electrode materials provided by the present invention can improve the energy density of secondary batteries while maintaining good electronic conductivity and ion conduction, thereby reducing impedance during the charging and discharging processes.

Compared with Example 1, in Comparative Example 1, the surface of large particles with a particle size ≥2µm was carbon-coated, leading to weakened ion conduction in the secondary battery and an increase in DC internal resistance at 50% SOC. Compared with Example 8, in Comparative Example 2, the surface of large particles with a particle size ≥2µm was carbon-coated, resulting in weakened ion conduction in the secondary battery and an increase in DC internal resistance at 50% SOC. Compared with Example 11, in Comparative Example 3, the surface of large particles with a particle size ≥2µm was carbon-coated, causing weakened ion conduction in the secondary battery and an increase in DC internal resistance at 50% SOC. In Comparative Example 4, a single positive electrode material 1 was used, while in Comparative Example 5, a single positive electrode material 2 was used, without varying the particle size of the positive electrode materials, leading to a lower ultimate compaction density of the positive electrode and reduced energy density of the secondary battery. In Comparative Example 6, the difference from Example 1 lies in the use of calcium oxide for coating. Due to its inert nature, calcium oxide cannot enhance ion conductivity, resulting in an increase in DC internal resistance at 50% SOC. In Comparative Example 7, the difference from Example 1 is that small particle positive electrode materials were not carbon-coated, leading to weakened electron conduction and ion conduction in the secondary battery, with a significant increase in internal resistance. In Comparative Example 8, the particle size distribution between large and small particles was uneven, with too many small particles, causing a decrease in the compaction density of the positive electrode, a decline in the energy density of the secondary battery, and weakened ion conduction, resulting in increased impedance. In Comparative Example 9, the difference is that the positive electrode material contained too many large particles, leading to an uneven particle size distribution, a decrease in the compaction density of the positive electrode, and insufficient electron conduction due to a lack of carbon-coated small particles, resulting in an increase in DC internal resistance.

Finally, it should be noted that the above embodiments are intended to illustrate the technical solution of the present invention and not to limit its scope. Although detailed explanations have been provided with reference to preferred embodiments, those skilled in the art should understand that modifications or equivalent substitutions can be made to the technical solution without departing from the essence and scope of the present invention.

## Claims

1. A secondary battery positive electrode material, **characterized in that** it comprises: large particles with particle size of ≥2µm and small particles with particle size of ≤1µm; at least some of the small particles have carbon coating on their surface; at least some of the large particles do not have carbon coating on their surface.

2. The secondary battery positive electrode material according to claim 1, **characterized in that** at least some of the large particles have an oxide coating layer.

3. The secondary battery positive electrode material according to claim 2, **characterized in that** the oxide coating layer is at least one of alumina, zirconia, cobalt oxide, boron oxide, nickel oxide, tungsten oxide, titanium oxide and vanadium oxide.

4. The secondary battery positive electrode material according to claim 1, **characterized in that** the positive electrode material satisfies at least one of the following:
(1) The positive electrode material has an olivine structure;
(2) The chemical formula of the positive electrode material is LiₓMn_{y}Fe_{1-y}PO₄, where 0.75≤x≤1.05, 0≤y≤0.9.

5. The secondary battery positive electrode material according to claim 4, **characterized in that** the positive electrode material further comprises metal doping elements.

6. The secondary battery positive electrode material according to claim 5, **characterized in that** the metal doping element is at least one of aluminum, zirconium, cobalt, tungsten, titanium, vanadium, nickel and magnesium.

7. The secondary battery positive electrode material according to claim 1, **characterized in that** the large and small particles have the same crystal structure.

8. The secondary battery positive electrode material according to claim 1, **characterized in that** the particle size distribution graph of the positive electrode material after decomposition includes at least two distribution peaks, where the area S1 of the largest peak with a median particle size ≥ 1.5 µm and the area S2 of the largest peak with a median particle size less than 1.5µm satisfy: 1:4≤S1:S2≤4:1.

9. A positive electrode for a secondary battery, **characterized in that** it comprises the secondary battery positive electrode material as claimed in any one of claims 1 to 8.

10. A secondary battery, **characterized in that** it comprises the positive electrode for the secondary battery according to claim 9.
